# EUROPÄISCHE PATENTSCHRIFT

(11) **EP 0 678 660 B1**
(45) Veröffentlichungstag und Bekanntmachung des Hinweises auf die Patenterteilung: **10.06.1998**
(21) Anmeldenummer: 95104159.9
(22) Anmeldetag: 22.03.1995
(51) Int. Cl.: F01N 7/00, G01M 15/00

(54) **Abschalteinrichtung in einem Gasmesssystem bei erhöhtem Wassergehalt**
Shutdown device in a gas measuring system at raised water content
Dispositif d'interruption dans un système de mesure de gaz à haute teneur en eau

(30) Priorität: 25.03.1994 DE 4410231
(43) Veröffentlichungstag der Anmeldung: 25.10.1995
(73) Patentinhaber: GRUNDIG Aktiengesellschaft, 90762 Fürth (DE)
(72) Erfinder: Hackner, Gerhard, Grundig E.M.V., D-90762 Fürth (DE)

(56) Entgegenhaltungen:
- DE-A- 4 117 529
- US-A- 4 386 534

## Beschreibung

Die Erfindung betrifft eine Abschalteinrichtung in einem Gasmeßsystem, insbesondere einem Abgasmeßsystem für Kraftfahrzeuge, bei erhöhtem Wassergehalt nach dem Oberbegriff des Anspruches 1.

Bei Abgasmeßgeräten wird das Abgas eines Kraftfahrzeuges aus der Auspuffanlage über eine Sonde in das Meßsystem eingesaugt. In den Kraftfahrzeugabgasen ist in der Regel auch Wasserdampf enthalten, der bei Eindringen in die Meßzelle des Gasmeßsystems keine zuverlässige Messung mehr zuläßt oder bei sehr hohem Gehalt an Wasser zum Totalausfall des Meßgerätes führt.

Aus der deutschen Offenlegungsschrift DE-OS 41 17 529 ist es bekannt, bereits am Eingang des Abgasmeßgerätes ein Filter vorzusehen, um Flüssigkeit oder Schmutz im Gasstrom abzusondern. Das durch das Filter von Schmutz und Flüssigkeit befreite Abgas wird dann zu den weiteren Komponenten des Meßgerätes weitergeleitet.
Es sind weitere Meßeinrichtungen bekannt, bei denen eine Vorrichtung enthalten ist, die insbesondere den im Abgas enthaltenen Wasserdampf kondensiert. Das kondensierte Wasser wird dann in einem Vorratsbehälter angesammelt und zyklisch abgesaugt.

In der Praxis tritt häufig auch der Fall auf, daß das in das Meßgerät einströmende Gas nicht nur Wasserdampf, sondern auch bereits im Auspuff kondensierte Flüssigkeit enthält oder, beispielsweise bei Bedienungsfehlern, nur Wasser in das Meßgerät eingesaugt wird. In diesem Fall können die Filter- oder Kondensorvorrichtungen, wie sie oben beschrieben sind, nicht mehr verhindern, daß das Wasser in die Meßzelle gelangen kann.
Die Folge des Eindringens von Wasser in das Meßsystem ist, daß eine zuverlässige Messung unmöglich ist und somit ein Totalausfall des Meßgerätes verursacht wird.

Aus diesem Grund verfügen bekannte Gasmeßsysteme häufig über eine zusätzliche Wasserpumpe, die mit dem gleichen Motor, der auch die Gaspumpe betreibt, angetrieben wird.
Auf diese Weise wird das Wasser in der Vorrichtung zur Wasserabscheidung bei Betreib der Gaspumpe, d.h. während des Meßvorganges, automatisch abgepumpt.

Der Nachteil der bekannten Anordnungen ist, daß die Wasserpumpe nicht unabhängig von der Gaspumpe betrieben werden kann.

Es ist deshalb Aufgabe der Erfindung, ein Gasmeßsystem anzugeben, bei der diese Abhängigkeit nicht besteht und bei der ohne Zutun des Bedienpersonals die notwendigen Vorgänge im Fehlerfall automatisch gesteuert werden.
Diese Aufgabe wird gemäß der Erfindung durch die Merkmale des Anspruches 1 gelöst.

Vorteilhafte Ausgestaltungen der Erfindung sind in den abhängigen Ansprüchen angegeben.

Die Abschaltvorrichtung gemäß der Erfindung weist eine erste Pumpe auf, die das Gas über eine Sonde in das Meßsystem saugt. Sie enthält ferner eine Wasserabscheidevorrichtung, von der mittels einer zweiten Pumpe das Wasser abgesaugt wird.
Die zweite Pumpe ist so ausgeführt, daß sie unabhängig von der ersten Pumpe betrieben werden kann.
Das Gasmeßsystem enthält weiterhin einen Sensor zur Bestimmung des Wasserstandes in der Wasserabscheidevorrichtung, der mit einer Rechen- und Steuereinrichtung zur Auswertung des Sensorsignales verbunden ist.
Die Rechen- und Steuereinrichtung ist so ausgeführt, daß bei Erkennen eines über einer vorgegebenen Grenze liegenden Wasserstandes in der Wasserabscheidevorrichtung ein Steuersignal ausgegeben wird, das die erste Pumpe abschaltet während die zweite Pumpe zum Wasserabpumpen weiterläuft.

Der Vorteil der erfindungsgemäßen Abschaltvorrichtung besteht darin, daß die erste Pumpe, die das zu messende Abgas in das Meßsystem einsaugt und die zweite Pumpe, die zum Abpumpen des Wassers von der Wasserabscheidevorrichtung und dem Gasweg dient, nicht miteinander gekoppelt sind. Auf diese Weise kann ein Vorgang eingeleitet werden, der das Wasser abpumpt während gleichzeitig die erste Pumpe, die zum Ansaugen des Gases dient, abgeschaltet wird.

Gemäß einer vorteilhaften Ausgestaltung der Erfindung wird vorgesehen, daß der Sensor zur Bestimmung des Wassergehaltes im Gasführungsweg ein Unterdrucksensor ist, mit dem ein erhöhter Unterdruck im Gasführungsweg auf Grund einer Strömungsbehinderung durch die Wasseransammlung bestimmt wird, wobei bei Überschreiten einer vorbestimmten Unterdruckgrenze ein zu hoher Wassergehalt im Gasführungsweg erkannt wird.

Auf diese Weise wird ein in einem Gasmeßsystem zur Durchführung von Dichtigkeitsprüfungen vorhandener Drucksensor zur Bestimmung des Wassergehalts im Gasführungsweg verwendet.
Je größer der Unterdruck ist umso höher ist der Wassergehalt im Gasführungsweg. Durch die Vorgabe einer Unterdruckgrenze wird eine Obergrenze des Wassergehalts festgelegt, bei deren Überschreiten die erste Pumpe abgeschaltet wird während die zweite Pumpe eingeschaltet bleibt. Somit wird das Ansaugen von weiterem Wasser verhindert und das im Gasführungsweg befindliche Wasser wird abgepumpt.

Gemäß einer weiteren vorteilhaften Ausgestaltung der Erfindung wird unterschieden, ob ein kurzzeitiger oder ein länger anhaltender Unterdruck gemessen wird. Im ersten Fall wird angenommen, daß nur eine kurzzeitige Wasseransammlung im Meßsystem vorhanden ist, die nicht zu einer wesentlichen Beeinträchtigung führt, und die durch kurzzeitiges Abpumpen des Wassers behoben werden kann, oder daß beispielsweise die Meßsonde kurzzeitig geknickt oder gequetscht wurde.

Im zweiten Fall liegt eine größere Wasseransammlung vor und es wird ein Betriebsmodus gestartet, bei dem der komplette Gasführungsweg einschließlich der Meßsonde und des Wasserabscheiders zunächst leergepumpt wird bevor mit einem neuen Meßvorgang begonnen wird.

Gemäß einer weiteren Ausgestaltung der Erfindung wird vorgesehen, daß im Gasführungsweg ein zusätzliches Schwimmerventil angeordnet ist, das den Gasführungsweg bei Überschreiten eines vorgegebenen Grenzwertes für die Wassermenge in den gasführenden Teilen verschließt.

Der Vorteil dieser Ausführungsform besteht darin, daß der Gasweg sofort verschlossen wird und ein Eindringen von Wasser in das Meßsystem ab dem Zeitpunkt der Erkennung eines erhöhten Wasserstandes im Wasserabscheider verhindert wird. Es wird also ein weiteres Ansaugen von Wasser während der Nachlaufzeit der Pumpe, d.h. in dem Zeitraum vom Erkennen der Behinderung bis zum Abschalten der Pumpe, verhindert.

## Patentansprüche

1. Abschalteinrichtung in einem Gasmeßsystem,
insbesondere in einem Abgasmeßsystem für Kraftfahrzeuge, bei erhöhtem Wassergehalt, mit einer ersten Pumpe, die das Gas über eine Sonde in das Meßsystem saugt, und einer Wasserabscheidevorrichtung, von der mittels einer zweiten Pumpe das Wasser abgesaugt wird,
**dadurch gekennzeichnet**, daß die zweite Pumpe so ausgeführt ist, daß sie unabhängig von der ersten Pumpe betrieben werden kann,
das Gasmeßsystem einen Sensor zur Bestimmung des Wasserstandes in der Wasserabscheidevorrichtung enthält, der mit einer Rechen- und Steuereinrichtung zur Auswertung des Sensorsignales verbunden ist, und die Rechen- und Steuereinrichtung so ausgeführt ist, daß bei Erkennen eines über einer vorgegebenen Grenze liegenden Wasserstandes in der Wasserabscheidevorrichtung ein Steuersignal ausgegeben wird, das die erste Pumpe abschaltet während die zweite Pumpe zum Wasserabpumpen weiterläuft.

2. Abschalteinrichtung nach Anspruch 1,
**dadurch gekennzeichnet**, daß
der Sensor zur Bestimmung des Wassergehaltes im Gasführungsweg ein Unterdrucksensor ist, mit dem ein erhöhter Unterdruck im Gasführungsweg auf Grund von Strömungsbehinderungen bestimmt wird, wobei bei Überschreiten einer vorbestimmten Unterdruckgrenze ein zu hoher Wassergehalt im Gasführungsweg erkannt wird.

3. Abschalteinrichtung nach Anspruch 2,
**dadurch gekennzeichnet**, daß
bei kurzzeitigem Überschreiten der Unterdruckgrenze nach Unterschreiten einer zweiten Grenze, die niedriger liegt als die erste, nach einer vorgegebenen Zeit wieder die erste Pumpe aktiviert wird und bei länger andauernder Überschreitung der Unterdruckgrenze ein Betriebsmodus eingeleitet wird, bei dem das Wasser im Gasführungsweg abgepumpt wird, bevor ein neuer Meßvorgang gestartet werden kann.

4. Abschalteinrichtung nach einem der Ansprüche 1 bis 3,
**dadurch gekennzeichnet**, daß
in der Wasserabscheidevorrichtung ein zusätzliches Schwimmerventil angeordnet ist, das bei Überschreiten eines vorgegebenen Grenzwertes für die Wassermenge den Gasführungsweg zum Meßsystem hin verschließt.

## Claims

1. Shutdown device in a gas measuring system, in particular in an exhaust-gas measuring system for motor vehicles, in the event of increased water content, comprising a first pump which sucks the gas into the measuring system via a probe, and a water-separating device from which the water is sucked off by means of a second pump, characterized in that the second pump is so designed that it can be operated independently of the first pump, the gas measuring system contains a sensor for determining the water level in the water-separating device, which sensor is connected to a computing and control device for evaluating the sensor signal, and the computing and control device is designed so that, if a water level situated above a preset limit is detected in the water-separating device, a control signal is emitted which shuts down the first pump, while the second pump continues to run in order to pump off water.

2. Shutdown device according to Claim 1, characterized in that the sensor for determining the water content in the gas flow passage is an underpressure sensor which determines an increased underpressure in the gas flow passage due to flow impediments, an unduly high water content in the gas flow passage being detected when a predetermined underpressure limit is exceeded.

3. Shutdown device according to Claim 2, characterized in that if the underpressure limit is exceeded for a short time after dropping below a second limit which is lower than the first, the first pump is activated again after a preset time and, in the event of the underpressure limit being exceeded for longer, an operating mode is initiated in which the water in the gas flow passage is pumped off before a fresh measuring operation can be started.

4. Shutdown device according to one of Claims 1 to 3, characterized in that an additional float valve is disposed in the water-separating device and, if a preset limit value for the amount of water is exceeded, it seals the gas flow passage to the measuring system.

## Revendications

1. Dispositif d'interruption dans un système de mesure de gaz, notamment dans un système de mesure des gaz d'échappement pour véhicules automobiles, dans le cas d'une teneur élevée en eau, comportant une première pompe, qui aspire le gaz par l'intermédiaire d'une zone dans le système de mesure, et un dispositif de séparation d'eau, qui aspire l'eau au moyen d'une deuxième pompe,
caractérisé en ce que
la deuxième pompe est agencée de telle sorte qu'elle peut fonctionner indépendamment de la première pompe,
que le système de mesure de gaz contient un capteur servant à déterminer le niveau d'eau dans le dispositif de séparation d'eau et qui est relié à un dispositif de calcul et de commande pour évaluer le signal du capteur, et
que le dispositif de calcul et de commande est agencé de telle sorte que lors de l'identification d'un niveau de l'eau situé au-dessus d'une limite prédéterminée dans le dispositif de séparation d'eau, un signal de commande est délivré, qui arrête -la première pompe, tandis que la deuxième pompe continue à- fonctionner pour évacuer l'eau par pompage.

2. Dispositif d'interruption selon la revendication 1, caractérisé en ce que le capteur servant à déterminer la teneur en eau dans la voie de guidage des gaz est un capteur à dépression, au moyen duquel une dépression accrue dans la voie de guidage du gaz est déterminée sur la base d'obstacles gênant l'écoulement, auquel cas lors du dépassement par le haut d'une limite de dépression prédéterminée, une teneur en eau trop élevée dans la voie de guidage des gaz est identifiée.

3. Dispositif d'interruption selon la revendication 2, caractérisé en ce que dans le cas d'un dépassement par le haut de brève durée de la limite de dépression, après un dépassement vers le bas d'une seconde limite qui est située à un niveau inférieur à la première, au bout d'un intervalle de temps prédéterminé la première pompe est réactivée et, dans le cas d'un dépassement par le haut, pendant une durée plus longue, de la limite de dépression, un mode de fonctionnement est activé, dans lequel l'eau située dans la voie de guidage des gaz est évacuée par pompage avant qu'un nouveau processus de mesure puisse être déclenché.

4. Dispositif d'interruption selon l'une des revendications 1 à 3, caractérisé en ce que dans le dispositif de séparation d'eau est disposée une soupape supplémentaire à flotteur, qui, lors du dépassement par le haut d'une valeur limite prédéterminée pour la quantité d'eau, ferme la voie de guidage des gaz en direction du système de mesure.
